# EUROPEAN PATENT SPECIFICATION

(11) **EP 1 136 578 B1**
(45) Date of publication and mention of the grant of the patent: **06.10.2004**
(21) Application number: 00948270.4
(22) Date of filing: 28.07.2000
(51) Int. Cl.: C22C 16/00

(54) **ZIRCONIUM ALLOY FOR NUCLEAR FUEL ASSEMBLY**
ZIRKONLEGIERUNG FÜR NUKLEAREN BRENNSTOFFAUFBAU
ALLIAGE DE ZIRCONIUM POUR ENSEMBLE COMBUSTIBLE NUCLEAIRE

(30) Priority: 30.07.1999 JP 21733899
(43) Date of publication of application: 26.09.2001
(73) Proprietor: Mitsubishi Heavy Industries, Ltd., Tokyo 100-8315 (JP); Nuclear Development Corporation, Naka-gun, Ibaraki-ken 319-1111 (JP)
(72) Inventor: SUZUKI, Shigemitu, Kobe Shipyard & Machinery Works, Hyogo-ku, Kobe-Shi, Hyogo-ken 652-8315 (JP); TAKAHASHI, Toshimichi, Mitsubishi Heavy Ind., Ltd, Tokyo 100-8315 (JP); DOI, Soichi, Kobe Shipyard & Machinery Works, Hyogo-ku, Kobe-Shi, Hyogo-ken 652-858 (JP); SUGANO, Mituteru, Kobe Shipyard & Machinery Works, Hyogo-ku, Kobe-Shi, Hyogo-ken 65 (JP); SENDA, Yasuhide, Kobe Shipyard & Machinery Works, Hyogo-ku, Kobe-Shi, Hyogo-ken 652 (JP); KIDO, Toshiya, Nuclear Development Corporation, Naka-gun, Ibaraki-ken 319-1111 (JP)
(74) Representative: HOFFMANN - EITLE
(86) International application number: PCT/JP2000/005049
(87) International publication number: WO 2001/009402

(56) References cited:
- EP-A- 0 532 830
- FR-A- 2 769 637
- JP-A- 62 207 835
- US-A- 4 992 240
- US-A- 5 023 048
- US-A- 5 241 571
- US-A- 5 539 791
- US-A- 5 560 790
- PATENT ABSTRACTS OF JAPAN vol. 1996, no. 07, 31 July 1996 (1996-07-31) -& JP 08 068884 A (SUMITOMO METAL IND LTD), 12 March 1996 (1996-03-12)
- CAHN R.W., HAASEN P., KRAMER E.J. : "Nuclear materials, vol.10B" 1994 , VCH , WEINHEIM XP002209131 ISBN: 3-527-29236-5 * page 10-15 *

## Description

### Technical Field

The present invention relates to Zr alloy for a nuclear fuel assembly. More particularly, the present invention relates to nuclear fuel assembly Zr alloy for structural members such as a nuclear fuel covering pipe, guide pipe, and support grid of a pressurized water reactor which meets endurance (strength) required and meets corrosion resistance, hydrogen absorption, and in-reactor dimensional stability.

### Background Art

As the material of structural members such as a nuclear fuel covering pipe, guide pipe, and support grid of a pressurized water reactor, Zr having low absorptivity of thermal neutrons is used. Such material is first required to have predetermined endurance. If the material has the endurance, corrosion resistance is next required, and moreover, hydrogen absorption and dimensional stability in the reactor are required. As such alloy, Zircaloy-4 is generally used. For the purpose of the improvement of cost performance of an atomic power generator plant, the fuel is tended to be burned highly. Under such a use environment, the corrosion resistance of Zircaloy-4 is more required. The nuclear fuel assembly Zr alloy in which the corrosion resistance is improved is known in Japanese Patent Nos. 1,984,830, 2,139,789 and 2,674,052.

In these patents, a ratio of added elements is defined but an amount of each of the added elements is not defined. The conventional material with no definition is sometimes insufficient in strength.

Fr 2 769 637 A describes a zirconium alloy comprising 0.2 to 1.7 % by weight of Sn, 0.18 to 0.6 % by weight of Fe, 0.07 to 0.4 % by weight of Cr, 0.05 to 1.0 by weight of Nb, the balance being Zr and inevitable impurities. Optionally Ta may also be included.

It is confirmed by the inventors of the present invention that the quantities of added elements influence the absolute value of endurance under the high temperature of 385 °C in the Zr alloy to which the additional elements, especially, Sn and Nb solid-soluble in the Zr alloy are added. Therefore, it is desired to improve the endurance of the Zr alloy to which Sn and Nb solid-soluble in the Zr alloy are added. Moreover, it is desired that corrosion resistance is improved in addition to improvement of strength, and moreover, the hydrogen absorption and the dimensional stability are improved.

### Disclosure of Invention

Therefore, an object of the present invention is to provide Zr alloy for nuclear fuel assembly in which (Sn+Nb) solid-soluble in the Zr alloy are added so that endurance (strength) can be improved.

Another object of the present invention is to provide Zr alloy for nuclear fuel assembly in which corrosion resistance can be improved in addition to the improvement of strength by adding (Sn+Nb) solid-soluble in the Zr alloy.

Still another object of the present invention is to provide Zr alloy for nuclear fuel assembly in which a total amount of (Sn+Nb) solid-soluble in the Zr alloy is defined and whose physical property in a solid-solution state of (Sn+Nb) is quantitatively controlled so as to improve the strength.

Yet still another object of the present invention is to provide Zr alloy for nuclear fuel assembly, in which amounts of Sn and Nb solid-soluble in the Zr alloy are defined and whose other physical and chemical properties can be improved as well as the physical property of the Zr alloy in a solid-solution state of (Sn+Nb) is quantitatively controlled so as to improve the strength and corrosion resistance.

The Zr alloy for nuclear fuel assembly of the present invention is defined in claim 1 and contains defined amounts of Fe, Cr, Sn and Nb, and moreover, contains O positively.

However, it does not have been known how containing of oxygen influences physical property. The corrosion resistance can be improved by containing oxygen positively in addition to Fe, Cr, Sn and Nb.

The Zr alloy for nuclear fuel assembly contains Sn of 0.2 to 0.6 weight%, Nb of 0.45 to 0.55 weight%, Fe of 0.27 to 0.33 weight%, Cr of 0.36 to 0.44 weight%, and O of 0.10 to 0.16 weight%. By this, the Zr alloy for nuclear fuel assembly can show the oxygen containing effect while further improving the strength. Especially, it is desirable that a total amount of Fe and Cr is 0.28 to 1.0 weight%.

It is important to consider that Sn and Nb coexisting in a solid-solution state are elements of a group (Sn+Nb) of a set of solid-soluble material. It is described in the above Japanese Patent No. 2,674,052 that Sn and Nb independently influence both of the strength and the corrosion resistance. However, it is not described in the reference that (Sn+Nb) as solid-soluble material sensitively influences the strength. It is also found by the inventors that the decrease in strength can be suppressed lower than 20% when the Zr alloy contains Fe and Cr and contains at least one of Sn and Nb, either of Sn and Nb is present in the solid-solution state, and a total amount of Sn and Nb is 0.7 weight% or more. In this case, the total amount of Sn and Nb is important. If saying extremely, the effect can be maintained even if the ratio of Sn and Nb is 0 to 100. If the total amount of (Sn+Nb) is equal to or more than 0.7 weight%, the decrease in the strength can be suppressed to equal to or less than 20%.

In this way, if the control of the strength through the addition of Sn or Nb, the control of the corrosion resistance through the addition of oxygen, and the control of composition with respect to temperature are carried out, the strength and the corrosion resistance can be controlled independently, and the Zr alloy adaptive for a desired application can be obtained. An additional effect of decreases of the hydrogen absorption quantity can be obtained through the improvement of the corrosion resistance. In addition, the dimensional stability is improved. Such Zr alloy is effective as alloy material used in the reactor, especially, as the material of a pipe for nuclear fuel assembly.

### Brief Description of Drawings

Fig. 1 is a graph showing the strength physical property of Zr alloy for nuclear fuel assembly according to an embodiment of the present invention; and
Fig. 2 is a graph showing an oxygen addition effect.

### Best Mode for Carrying Out the Invention

Hereinafter, Zr alloy for nuclear fuel assembly of the present invention will be described in detail. The Zr alloy for nuclear fuel assembly according to an embodiment of the present invention contains Sn, Nb, Fe and Cr, and further contains O. Sn and Nb are in a solid-soluble state in the Zr alloy.

The Zr alloy for nuclear fuel assembly contains Sn of 0.2 to 0.6 weight%, Nb of 0.45 to 0.55 weight%, Fe of 0.27 to 0.33 weight%, Cr of 0.36 to 0.44 weight%, and O of 0.10 to 0.16 weight%.

Such Zr alloy sometimes contains Ni. In such a case, it is desirable that Ni is 0.1 weight% or less. Also, Ta, Ni, and other impurity materials (elements) are contained in the Zr alloy. Material other than those elements is Zr except for impurities which are inevitably contained.

The definition of a total amount of Sn and Nb is effective to maintain predetermined strength of the Zr alloy. Especially, when the total amount of Sn and Nb is 0.7 weight% or more, the strength above the predetermined value can be maintained. In this case, Sn may be substantially 0 weight%.

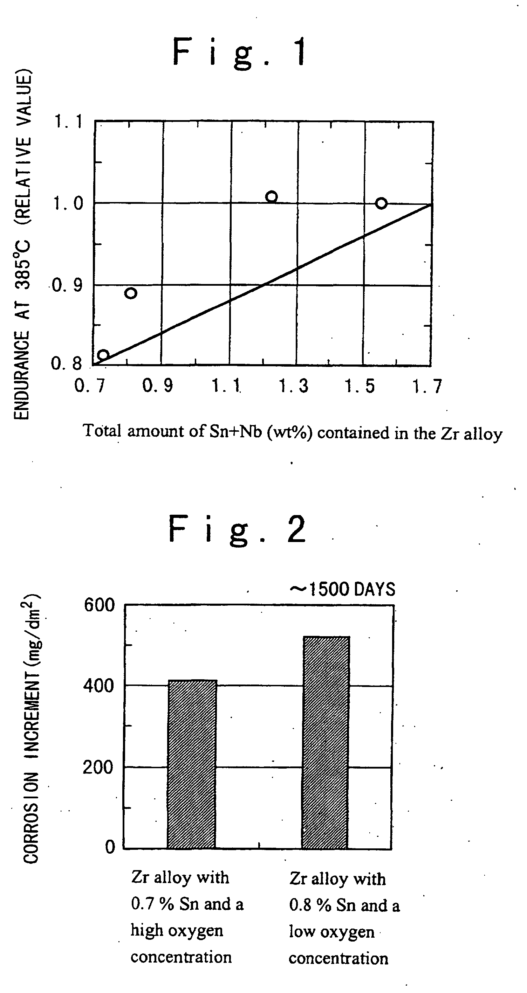

It has been confirmed by the inventors that an absolute value of endurance of such Zr alloy is influenced by 2% for Sn and 3% for Nb per 1 weight% of each of Sn and Nb at the temperature of 385 °C. Also, if the total amount of Sn and Nb is defined to be equal to or more than 0.7%, it has been confirmed that the decrease in the endurance can be suppressed within 20%, compared with present Zircaloy-4, as shown in Fig. 1. It can be concluded according to such a fact that a good result can be obtained when the total amount of Sn and Nb is 0.7 weight% or more. The endurance depends on the concentration of (Sn+Nb) which exists in the solid-solution state in the Zr alloy. The influence of the containing percentage of Sn and Nb results in the concentrations of (Sn+Nb) which coexist in the solid-solution state. The solid-solution state which is influenced by processing time and processing temperature is estimated to influence strength consequently.

It should be noted that the endurance is a value obtained by a single axis tensile test at the temperature of 385 °C to the Zr alloy which has containing percentage according to the present invention.

In currently used Zircaloy-4, the containing percentage of Sn is 1.2 to 1.7 weight%. In the currently used Zircaloy-4, when the containing percentage of Sn decreases from 1.7 weight% to 0.7 weight%, the endurance decreases to 0.8. On the other hand, in the present invention, the endurance value is located above a straight line which indicates a 20% decrease line, as shown in Fig. 1. This implies that when the total amount of Sn and Nb is increased to 0.7 weight% or more, it is possible to make increase rate of the endurance reliably larger than in the conventional examples.

Fig. 2 shows that the containing percentage of oxygen influences the corrosion resistance. When high oxygen concentration Zr alloy which contains Sn of 0.7 weight% and low oxygen concentration Zr alloy which contains Sn of 0.8 weight% are compared, the corrosion resistance becomes adverse when the oxygen containing percentage decreases.

Oxygen of a degree of 0.05 weight% is naturally contained in Zr alloy. As mentioned above, it has been found by the inventors that oxygen is not an impurity but influences the corrosion resistance. Therefore, in the Zr alloy for nuclear fuel assembly of the present invention, oxygen is positively added more than a quantity of oxygen which exists naturally in the Zr alloy.

A fuel covering pipe of Zr alloy is corroded through hydrogen absorption when it is used in the water of a pressurized light water reactor. The present invention provides the improvement effect of such corrosion at the same time. The fuel covering pipe of Zr alloy desirably has the dimensional stability in the nuclear reactor. The present invention also provides the improvement of the dimensional stability at the same time. The Zr alloy for nuclear fuel assembly according to the present invention can improve the corrosion resistance while maintaining strength. This is achieved by the control of a total amount of Sn and Nb in the solid-solution state.

### Industrial Applicability

The present invention has advantages in Zr alloy for a nuclear fuel assembly, more particularly, in nuclear fuel assembly Zr alloy for structural members such as a nuclear fuel covering pipe, guide pipe, and support grid of a pressurized water reactor which meets endurance (strength) required and meets corrosion resistance, hydrogen absorption, and in-reactor dimensional stability.

## Claims

1. Zr alloy for nuclear fuel assembly, comprising Fe, Cr, Sn and Nb and further comprising O positively and,
wherein said Zr alloy comprises:
Sn of 0.2 to 0.6 weight%;
Nb of 0.45 to 0.55 weight%;
Fe of 0.27 to 0.33 weight%;
Cr of 0.36 to 0.44 weight%; and
O of 0.10 to 0.16 weight%,
the balance being Zr and inevitable impurities, which impurities comprise Ta and/or 0.1 weight % or less of Ni.

2. The Zr alloy for nuclear fuel assembly according to claim 1, wherein the total amount of Fe and Cr is 0.28% to 1.0 weight%.

3. The Zr alloy according to claim 1 or 2 wherein at least one of Sn and Nb exists in a solid-solution state and the total amount of Sn and Nb is 0.7 weight% or more.

## Patentansprüche

1. Zr-Legierung für nuklearen Brennstoffaufbau, umfassend Fe, Cr, Sn und Nb und weiterhin positiv umfassend O, und worin die Zr-Legierung umfaßt:
Sn 0,2 bis 0,6 Gew.%
Nb 0,45 bis 0,55 Gew.%
Fe 0,27 bis 0,33 Gew.%
Cr 0,36 bis 0,44 Gew.% und
O 0,10 bis 0,16 Gew.%,
wobei der Rest Zr und unvermeidbare Verunreinigungen sind, wobei die Verunreinigungen Ta und/oder 0,1 Gew.% oder weniger Ni umfassen.

2. Zr-Legierung für nuklearen Brennstoffaufbau nach Anspruch 1, worin die Gesamtmenge an Fe und Cr 0,28 bis 1,0 Gew.% ist.

3. Zr-Legierung nach Anspruch 1 oder 2, worin zumindest eines von Sn und Nb im festen Lösungszustand existiert und die Gesamtmenge an Sn und Nb 0,7 Gew.% oder mehr ist.

## Revendications

1. Alliage de Zr pour assemblage de combustible nucléaire, comprenant Fe, Cr, Sn et Nb et comprenant en outre de manière certaine O et, dans lequel ledit alliage de Zr comprend :
Sn de 0,2 à 0,6 % en poids,
Nb de 0,45 à 0,55 % en poids,
Fe de 0,27 à 0,33 % en poids,
Cr de 0,36 à 0,44 % en poids, et
O de 0,10 à 0,16 % en poids,
le reste étant du Zr et des impuretés inévitables, lesquelles impuretés comprennent Ta et/ou 0,1 % en poids ou moins de Ni.

2. Alliage de Zr pour assemblage de combustible nucléaire selon la revendication 1, dans lequel la teneur totale de Fe et Cr est de 0,28 % à 1,0 % en poids.

3. Alliage de Zr selon la revendication 1 ou 2, dans lequel au moins un de Sn et Nb existe dans un état de solution solide et la teneur totale de Sn et de Nb est de 0,7 % en poids ou plus.
